# EUROPEAN PATENT APPLICATION

(11) **EP 4 366 395 A1**
(43) Date of publication of application: **08.05.2024**
(21) Application number: 23205321.5
(22) Date of filing: 23.10.2023
(51) Int. Cl.: H04W 52/02

(54) **USER EQUIPMENT ASSISTANCE FOR DORMANT CELL ACTIVATION**

(30) Priority: 04.11.2022 US 202217981350
(71) Applicant: Nokia Technologies Oy, 02610 Espoo (FI)
(72) Inventor: KHLASS, Ahlem, Massy (FR); LASELVA, Daniela, Klarup (DK); LAURIDSEN, Mads, Gistrup (DK); OIKONOMAKOU, Maria, Antony (FR); BHATTI, Gagandeep, Coppell (US)
(74) Representative: Nokia EPO representatives

(57) **Abstract**

Systems, methods, apparatuses, and computer program products for providing assistance information from a user equipment to a capacity cell, for example in a wake-up request signal while the capacity cell is in dormant state are provided. For example, a method can include sending a message to a network element. The message may include assistance information associated with system information stored at a user equipment The user equipment sending the message can receive a response from the network element.

## Description

### FIELD:

Some example embodiments may generally relate to communications including mobile or wireless telecommunication systems, such as Long Term Evolution (LTE) or fifth generation (5G) radio access technology or new radio (NR) access technology, or other communications systems including subsequent generations of the same or similar standards. For example, certain example embodiments may generally relate to providing assistance information from a user equipment to a capacity cell, for example in a wake-up request signal while the capacity cell is in dormant state.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. From release 18 (Rel-18) onward, 5G is referred to as 5G advanced. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio. 6G is currently under development and may replace 5G and 5G advanced.

### SUMMARY:

An embodiment may be directed to an apparatus. The apparatus may include at least one processor and at least memory storing instructions. The instructions, when executed by the at least one processor, may cause the apparatus at least to send a message to a network element. The message may include assistance information associated with system information stored at the apparatus. The instructions, when executed by the at least one processor, may also cause the apparatus at least to receive a response to the message from the network element.

An embodiment may be directed to an apparatus. The apparatus may include at least one processor and at least memory storing instructions. The instructions, when executed by the at least one processor, may also cause the apparatus at least to receive, from a user equipment while the apparatus is dormant, a message that includes assistance information associated with system information stored at the user equipment. The instructions, when executed by the at least one processor, may also cause the apparatus at least to send a response to the message to the user equipment.

An embodiment may be directed to a method. The method can include sending a message to a network element. The message may include assistance information associated with system information stored at a user equipment. The method may also include receiving a response to the message from the network element.

An embodiment may be directed to a method. The method can include receiving, from a user equipment while the network element is dormant, a message that includes assistance information associated with system information stored at the user equipment. The method may also includes sending a response to the message to the user equipment.

An embodiment can be directed to an apparatus. The apparatus can include means for sending a message to a network element. The message may include assistance information associated with system information stored at a user equipment. The apparatus may also include means for receiving a response to the message from the network element.

An embodiment can be directed to an apparatus. The apparatus can include means for receiving, from a user equipment while the network element is dormant, a message that includes assistance information associated with system information stored at the user equipment. The apparatus may also include means for sending a response to the message to the user equipment.

### BRIEF DESCRIPTION OF THE DRAWINGS:

For proper understanding of example embodiments, reference should be made to the accompanying drawings, wherein:
FIG. 1 illustrates a network design with a coverage cell and several capacity cells;
FIG. 2 illustrates an example of an outcome of cell activation, according to certain embodiments;
FIG. 3 illustrates a signal flow diagram of a method according to certain embodiments;
FIG. 4 illustrates methods according to certain embodiments; and
FIG. 5 illustrates an example block diagram of a system, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing providing assistance information from a user equipment to a capacity cell, for example in a wake-up request signal while the capacity cell is in dormant state, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Certain embodiments may have various aspects and features. These aspects and features may be applied alone or in any desired combination with one another. Other features, procedures, and elements may also be applied in combination with some or all of the aspects and features disclosed herein.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments relate to network energy savings. The focus is on the radio access network (NW), which is the portion of the network that consumes the largest part of the total energy consumption in the network. Network energy savings may arise from adaptation techniques of transmissions and/or receptions in time, frequency, spatial, and power domains, with potential support/feedback from UE, potential UE assistance information, and information exchange/coordination over network interfaces.

NW energy saving can be achieved in empty/low load situation using infrequent synchronization signal block (SSB) transmission, such as SSB periodicity of 160 ms, which may be maximum periodicity.

Additionally, NW energy saving can be achieved by sleep states. A micro sleep state may be defined by enabling a micro- discontinuous transmission (microDTx) feature, which can include shutting down the power amplifier (PA) on a per orthogonal frequency division multiplexed (OFDM) symbol basis, in symbols that do not carry data nor signaling. A light/deep sleep state may include additional components being shut down, as compared to a micro sleep state. In a deep sleep state, most of the base station (BS) components may be shut down. Finally, a cell may be switched off, or placed into a cell shutdown state. In such a case, a cell may only be activated upon need, for example as a capacity booster.

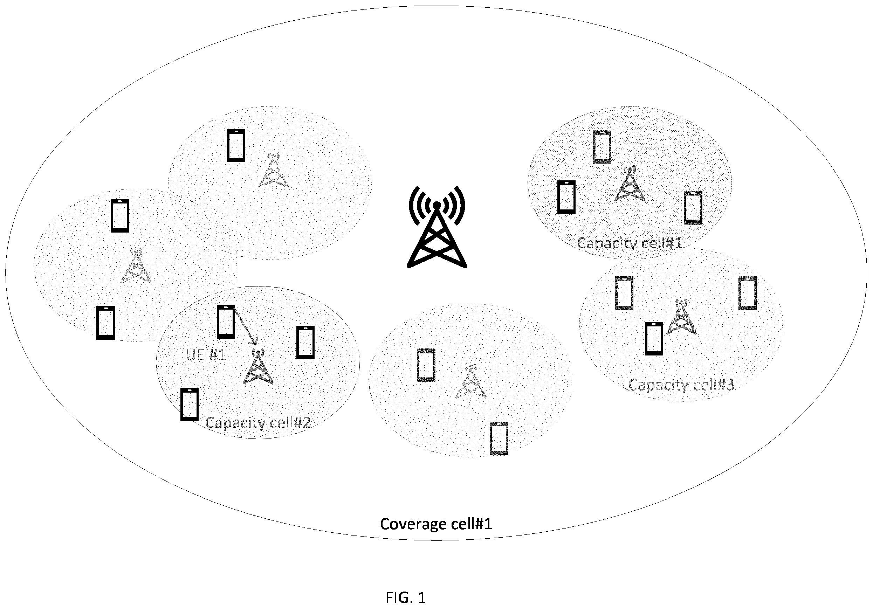

FIG. 1 illustrates a network design with a coverage cell and several capacity cells. A typical NW deployment is depicted in FIG. 1. The large ellipse in FIG. 1 represents the coverage area of a cell served with a macro base station, denoted as a coverage cell. The smaller ellipses represent the coverage areas of small cells, denoted as capacity cells. As the name suggests, the coverage cell can provide basic underlay coverage in the network of a certain area, and the small cells can be overlaid over the coverage cell for capacity boosting purposes particularly within so-called hot spot zones. UEs can be served by the coverage cell or by a capacity cell. For example, UE1 in FIG. 1 can be served by coverage cell#1 or capacity cell#2.

Capacity cells can be active or the capacity cells can be switched off during low load/empty periods to achieve network energy savings since all active components of the capacity cell are turned off. Thus, significant energy consumption reduction can be achieved. Capacity cells #1, #2 and #3 are active cells in this example, and the remaining unlabeled capacity cells are switched off.

Thus, FIG. 1 illustrates a typical network design with a coverage cell and several capacity cells that are turned on and off depending on the need to, for example, offload the traffic or to, for another example, boost the overall capacity in addition to the coverage cell's capacity.

An issue for capacity cell deactivation/activation is the time spent by each hardware (HW) or software (SW) component to switch between on and off states, which can be significantly long. Rather than completely turning off the components, a more efficient way may be to define an intermediate state, sleeping state, in which most components are switched off but can be activated upon need.

To activate a sleeping base station, a BS wake-up signal (WUS) may be provided. The concept of BS wake-up by the UE via a BS wake-up signal was primary designed for sensor networks to facilitate cell activation based on the UE's request. In that implementation, the radio unit may be equipped with low power entities including a wake-up receiver (WuRx) and wake-up transmitter (WuTx) for the reception/transmission of small message with low complexity, for example WUS.

For mobile networks, the main radio may be maintained ON, but may operate in an energy saving (ES) mode, also called dormant mode, in which active transmission and reception occasions are reduced. For example, legacy SSBs/SIB1 may not be transmitted as in normal operation. The BS may switch ON the PA occasionally to send a discovery reference signal (DRS) to announce the BS's presence and to enable UEs to acquire synchronization. The DRS may include, for example, two symbols for primary synchronization signal (PSS) and secondary synchronization signal (SSS). The BS may monitor for WUS reception after DRS transmission for a pre-defined time window. The UE may decide to send a WuS request based on different conditions, for example based on signal strength towards the capacity cell and/or traffic type.

Upon WuS reception, the BS may approve the UE request by switching ON all components and resuming full operational mode or may choose to ignore the request. The choice may be based on implementation specific decision algorithms or a standardized approach.

System information block (SIB) value tag may be an integer value from 0 to 31. The value tag may be included in the system information scheduling information, SI-SchedulingInfo, information element.

According to third generation partnership project (3GPP) technical report (TR) 38.331, the UE may acquire a master information block (MIB) or a system information block one (SIB1) or a system information (SI) message in a serving cell. If the UE stores the acquired SIB, then the UE may store the associated areaScope, if present, the first public land mobile network (PLMN)-Identity in the PLMN-IdentityInfoList for non-NPN-only cells or the first non-public network (NPN) identity in the NPN-IdentitylnfoList for NPN-only cells, the cellIdentity, the systemInformationAreaID, if present, and the valueTag, if present, as indicated in the si-SchedulingInfo for the SIB. The first PLMN-Identity may be standalone NPN (SNPN) identity in case of SNPN, or public network integrated (PNI)-NPN identity in case of PNI-NPN. The information element (IE) SI-SchedulingInfo of SIB1 may contain information needed for acquisition of SI messages as described in 3GPP technical specification (TS) 38.331, version 15.5.1, Release 15, for example. The valueTag of SI-SchedulingInfo may allow a UE to determine if a stored SIB is valid by comparing the valueTag of the stored SIB with the valueTag in the received SI-SchedulingInfo.

Furthermore, the positioning SIB (posSIB) may contain an expiration time field, which is defined in 3GPP TS 37.355 as expirationTime, a field that indicates how long the broadcast assistance data content is valid. This field may be specified as UTC time and may indicate when the broadcast assistance data content will expire. As defined in 3GPP TS 38.331, for other SIBs, the UE is required to delete any stored version 3 hours after the SIB was confirmed to be valid.

In certain embodiments, UEs may be pre-configured with WuS resources, in terms of time/frequency resources and/or WuS sequences, so that the UEs can send a BS WuS to request the activation of a cell that is currently in energy saving mode when an UL data transmission is needed.

If the cell is not able to identify the UE from the received WuS, the capacity cell may need to switch from an energy saving mode to a normal operation mode and to start transmitting legacy signaling including SSBs and SIB 1. Such transmission of legacy signaling may not be needed for UEs that were served by the capacity cell in the near past. Moreover, the switching out of energy saving mode to normal operation and the transmission of the signaling may introduce an undesired latency in the initial access and additional energy consumption at the capacity cell.

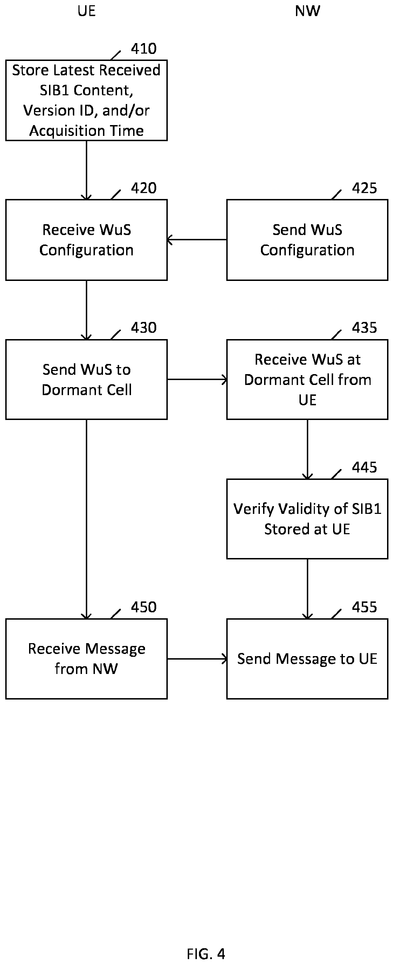

FIG. 4 illustrates methods according to certain embodiments. The methods shown in FIG. 4 may be performed by a UE and a NW element, such as a BS. In certain embodiments, UE assistance can be provided for cell activation through a WuS. The UE assistance may be provided for a dormant/capacity cell to decide on transmitting legacy signaling including SSBs and SIB1, if needed.

At 410, the UE can store the latest received SIB 1 content and associated version ID, denoted by SIB1_Version, and/or the acquisition time, denoted by SIB1_Time, for a certain SIB1_validity_timer. In one example, the SIB1_Version could be the valueTag provided si-SchedulingInfo IE. The latest received SIB 1 content can refer to the latest SIB 1 content that was successfully received, decoded, and otherwise received in such a way that it is potentially useful to the UE.

In one example, the SIB1_validity_timer may be configured by the NW. Before the expiry of the SIB1_validity_timer, the network may not be allowed to change the SIB 1 content. After the expiry of the SIB1_validity_timer, the UE can keep the stored SIB 1 until receiving an updated version. This may allow the UE to merge the old SIB 1 with updated information, for example, by receiving changes relative to the old SIB 1. Alternatively, the UE can discard the outdated SIB1.

An example of this SIB1_validity_timer may be 3 hours, as may be valuable with current specifications, but another value may be provided specific to ES aspects or for any other desired reason. In one example, the SIB1_Time may be defined as the time at which the UE has successfully received the latest SIB1 or the elapsed time since the last successful SIB 1 acquisition.

In one option, the UE may store the complete SIB1 content. In an alternative option, the UE may store part of the received SIB1 content including the configuration for WuS transmission. The UE may receive the SIB from the dormant/capacity cell, before it goes dormant, or from a neighbor/coverage cell. A network element in a sleep mode that can be responsive to receive a wake-up signal from the UE to be woken up from the sleep mode to a higher activity mode can be considered a dormant cell. The cell may be considered dormant from the UE perspective, even if the actual state of the cell has changed, for example if the UE is unaware of the state change of the cell.

At the 420, the UE may receive a WuS configuration that includes instructions on how to provide assistance to the network. The WuS configuration may be sent from the network at 425. The assistance information can indicate the UE's need for network transmission of legacy SSBs and SIB1 upon cell activation. The UE assistance can indicate the following: a valid SIB1 stored based on the SIB1_validity timer, when configured; a stored SIB 1 without ensuring its validity if SIB1_validity timer is not configured; the SIB1_time and/or SIB1_version of the stored SIB1; no valid SIB1 stored; need for complete SSB (i.e. the PSS and SSS, also included in the DRS, and the PBCH of the legacy SSB) instead of DRS; or any combination, subset, or superset of these. The WuS configuration can indicate what assistance information the UE is to provide and how the UE is to convey that information.

At 430, the UE can send the WuS to the dormant cell. The UE can send the WuS directly to the dormant cell, or the UE can send a message to another device, such as another network element, which in turn may wake up the dormant cell. The NW can receive the WuS at 435. The NW element that receives the WuS may be the same or different from the NW element that provided the WuS configuration. The WuS can include assistance information associated with system information stored at the UE, based on one of the following options. The WuS can indicate that the assistance information should be transferred to the dormant cell via a neighboring network element, or the like. Thus, the UE may contact a non-dormant network element and request/instruct the non-dormant network element to indicate the request for waking up and/or provide the UE's assistance information to the dormant network element.

In one option, the assistance information may be implicitly provided using certain WuS sequences and/or time/frequency resources that are mapped to certain conditions verified by the UE. In this case, the WuS signal may contain a sequence, for example a random access (RA) preamble, sent in specific time/frequency resources. A few examples are provided that focus on WuS sequence mapping, where multiple time/frequency resources that can be selected by the UE according to the network configuration can be used in a way to convey relevant assistance information to the network. For example, if sequence A is selected, it can be interpreted by the network as no SIB 1 stored. By contrast, if another sequence, sequence B, is selected, it can be interpreted by the network that the UE has a stored SIB 1 and has acquired synchronization, for example from DRS provided by the dormant/capacity cell or SSBs provided by the coverage cell or by a neighbor cell.

In another option, the assistance may be explicitly provided through additional payload/information elements included in the WuS payload. In this case, the WuS signal may contain sequences and payload sent in specific time/frequency resource and the UE can provide additional information including the last SIB 1 time or/and the latest SIB 1 version being stored.

At 445, based on the received information, the dormant/capacity cell can verify the validity of the SIB 1 stored at the UE and can decide on pursuing with one of the following behaviors. According to a first option, at 455 the NW can send complete SSBs and SIB, which can be referred to as the legacy signalling, if the UE has indicated that there is no stored SIB1 and that the UE needs complete SSB. In certain embodiments, the NW can send at least one complete SSB and/or system information, such as SIB1.

As another option, at 455 the NW can send a message that can include complete SIB1 as in legacy procedure, if the UE has indicated that there is no stored SIB1. Indeed, the message sent to the UE at 455 can include SIB1, SSB, or any combination thereof. The cell may continue transmitting the DRS.

As further option, at 455 the NW can send the updated information of SIB 1, if the UE has indicated a stored SIB 1 but the SIB1 information is outdated based on SIB_Validity_Timer, if configured. For example, the updated information can be the difference(s) from the previously stored SIB1. The cell may continue transmitting the DRS. Based on the provided information as to the SIB1_time and/or SIB1_version, the capacity cell can verify the validity of SIB 1 and can provide the updated SIB 1 information instead of the complete SIB1. Here, the updated SIB1 information can be based on the delta configuration between new and old information elements, or it can be only the information elements that have changed.

As another, the NW may not send SIB1 as the UE indicated that SIB 1 is still valid. At 455, the cell may continue transmitting the DRS.

In the options where SIB1 is being sent in whole or in part, the dormant/capacity cell may decide to transmit SIB1, and optionally DRS/SSBs, multiple times based on WUS received power/time alignment. This may enable UEs in poor coverage to acquire the SIB 1.

Additionally/alternatively, the dormant/capacity cell can verify the validity of the SIB1 stored at the UE based on SIB1_validity_timer. After timer expiry, all received WuS requests may be followed with a transmission of a new SIB 1. This may be valuable when the UE assistance is implicitly provided using specific WuS sequences and no additional information on the stored SIB 1 is provided along with the WuS request.

Instead of or in addition to the above, at 455 the dormant/capacity cell may send an explicit acknowledgement to inform the UE that the wake-up request is received and/or approved. It is not necessary that the NW cell still be dormant when sending this acknowledgment.

In certain embodiments, the acknowledgement can be a scheduling grant or an indication indicating the activation of a scheduling grant (e.g. a configured grant). The scheduling grant can be provided if the assistance information included information on the traffic type and required UL resources. This may be possible if the UE has provided sufficient information in WuS on the required UL resources, such as buffer status report (BSR), or an indication to activate a (pre)configured grant. The dormant/capacity cell may be able to identify the UE if the UE provides a UE specific ID, for example inactive radio network temporary identifier (I-RNTI), in the WUS payload or if the WUS is UE-specific on its own.

In an example embodiment, the acknowledgment or other network response may be provided in a specific beam. For example, the acknowledgement or other network response may provided at least in the same beam from which WuS was received. For example, only the SSB associated with the same beam may be provided, for example having the SSB ID corresponding to the same beam. Similarly, the SIB1 may be sent only from the same beam. Transmissions of SSB and SIB1 may not take place in any other beam in this example.

In an alternative embodiment, the dormant/capacity cell may provide an implicit acknowledgement. For example, it may provide the complete SSB at least once, using pre-defined resource location in time/frequency domains. For example, the start of the complete SSB transmission can occur as per DRS's timing. Alternatively, the network may transmit at least one additional DRS, or another reference signal, at a predefined time offset e.g. related to the WUS transmission/reception timing (e.g. x ms after the WUS reception), or at a predefined time offset related to the first DRS following the WUS transmission/reception timing (this assumes the DRSs are sent periodically for enabling synchronization in the WUS operations). When the UE detects the implicit acknowledgement, the UE can assume that the cell is non-dormant (available), and may initiate e.g. the random-access procedure based on the previously acquired SIB.

The above procedures may be premised on the dormant cell transmitting DRS instead of SSB. In certain embodiments the dormant cell may still transmit SSB, but not the SIB 1. Thus, certain embodiments may only address the SIB 1 validity issue and how the UE can signal the stored SIB 1 state via the WuS.

The acknowledgment or other message, whether explicit or implicit, may be received by the UE at 450.

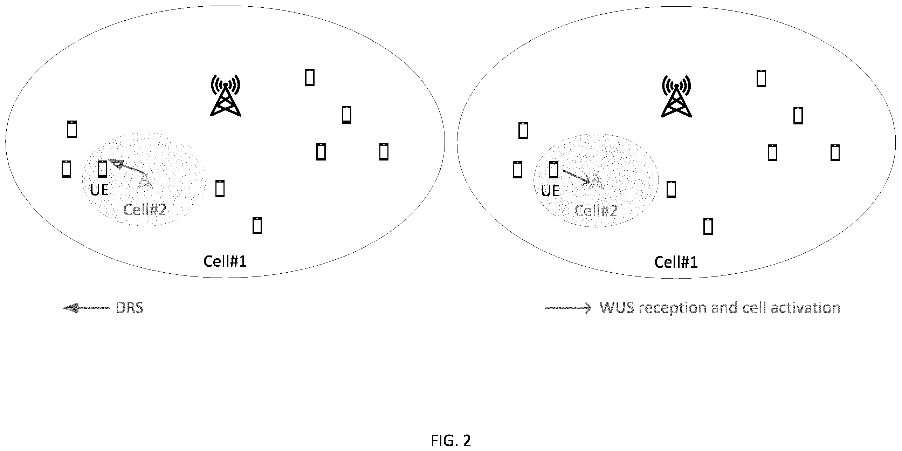

FIG. 2 illustrates an example of an outcome of cell activation, according to certain embodiments. The exemplary network illustrated in FIG. 2 can include a coverage cell, denoted by cell 1 and a capacity cell, denoted by cell 2, which is in a power saving mode/dormant. Thus, cell 2 may send DRS and may monitor for WuS occasionally.

The UE may be in RRC inactive/idle state, camping in the coverage cell and may receive signals such as DRS from another cell, such as a capacity cell.

The UE can be synchronized to the network in various ways. The UE can be synchronized to the network through SSBs provided by the capacity cell while operating in normal mode. The UE can also be synchronized to the network through DRS provided by the capacity cell while operating in ES mode or dormant mode. The UE can additionally be synchronized to the network through information provided by the coverage cell when the capacity cell operates in ES mode, for example for SSB-less operation.

The UE can acquire SIB 1 from the capacity cell while operating in normal mode and/or from the coverage cell when the capacity cell operates in ES mode, for example in SIB1-less operation.

The network can provide the WuS configuration, for example resources in time/frequency and/or WuS sequences, to be used for requesting cell activation. In certain embodiments, the WuS configuration can be provided by the coverage cell, a neighbor cell, or the capacity cell before entering dormant mode.

The WuS configuration may have a version number / validity information, which may be separate from the version/validity of the SIB 1. This additional version/validity information may allow the network to operate with a more static WuS configuration than the SIB 1 configuration and furthermore the separation of validity may enable the UE to send WuS even if the SIB 1 information is determined to be outdated. Only in the case where the WuS configuration is outdated, would the UE be prohibited to send the WuS, in such an example. In that case, the UE may obtain a new configuration from the network.

The UE may decide to wake up the capacity cell by sending a WuS request, because the UE has data to transmit, and the DRS may indicate that capacity cell is a good target cell in terms of radio coverage.

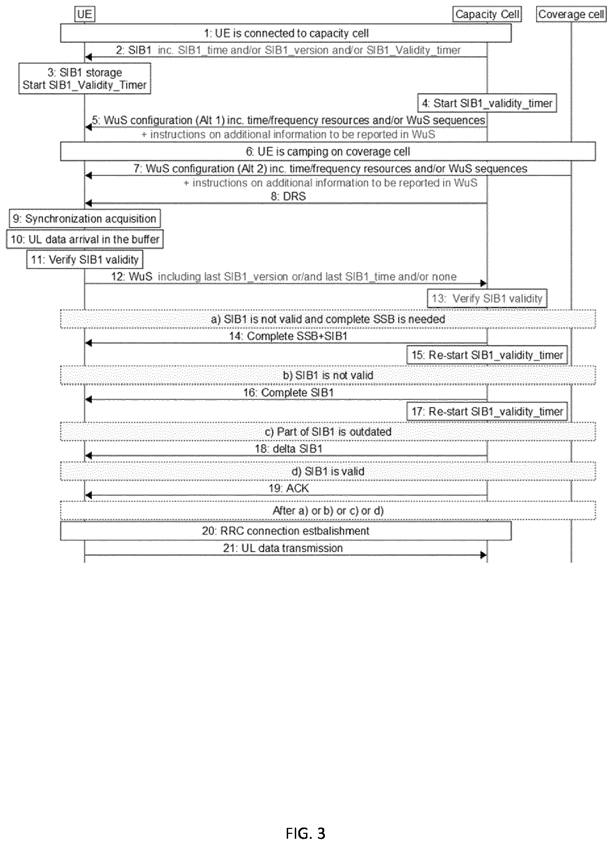

FIG. 3 illustrates a signal flow diagram of a method according to certain embodiments. As shown in FIG. 3, at 1, the UE may initially be connected to the capacity cell. At 2, the UE may receive the SIB 1 including SIB 1 time and/or SIB1_version and/or SIB1_Validity_Timer. At 3, the UE may store the received SIB 1 and may start the SIB1_validity_Timer, if configured.

At 4, the capacity cell may start the SIB1_validity_Timer, during which the network may be prohibited from making changes on the SIB1 content. At 5, in one alternative, the WuS configuration may be provided by the capacity cell while still fully operational. The configuration can include time/frequency resources and /or WUS sequences and instructions on how to provide assistance information through WuS. In another alternative, at 6, if the UE re-selects the coverage cell, the WuS configuration can be provided by the coverage cell, which can include the same content.

At 7, when switched to an ES mode, the capacity cell can start sending DRS periodically and can monitor for WUS.

At 8, in the presence of UL data, UE can decide to wake up a capacity cell from which the UE has received DRS with good radio conditions and acquired synchronization. In one example, the decision could be based on the traffic type and/or target quality of service (QoS).

At 9, the UE can verify if the stored SIB 1 is still valid based on the SIB1_Validity_Timer, if configured. Based on this verification, at 10, the UE can send a WuS request to the capacity cell. The request can include assistance information that includes one of the following options: explicit assistance information on the last stored SIB1, such as last SIB1 version or/and last SIB1_time and/or none in the case of no stored SIB 1; or implicit assistance information through selected WuS sequence to be interpreted by the NW.

At 11, based on the UE assistance information, the capacity cell can verify whether the stored SIB 1 is valid and can decide to send complete SIB 1 and SSB, if the UE has indicated that there is no stored SIB1 and that it needs complete SSB. The capacity cell can decide to send complete SIB1 if the UE has indicated that there is no stored SIB 1. The capacity cell can decide to send delta SIB1 if the UE has indicated a stored SIB1 but outdated, based on SIB1_Validity_Timer, if configured. The capacity cell can send ACK if the UE has indicated that SIB 1 is still valid.

At 12, the RRC connection can be established, and the UL data can be transmitted, as in legacy procedure.

Certain embodiments focus on SIB 1 acquisition, which may be needed before performing RA and UL data transmission but could be applied to another SI, if desired.

In certain embodiments, the validity of the SIB is determined not only by the UE for the UE's own purposes, but also by the capacity cell for the capacity cell's purposes, for example when determining how to communicate with the UE in response to a wake-up signal.

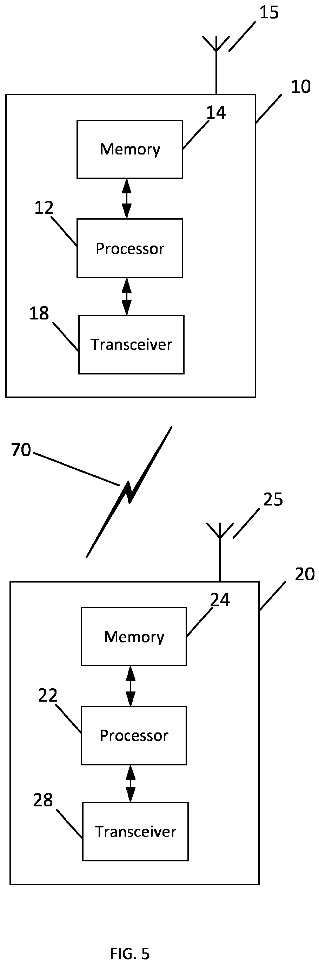

FIG. 5 illustrates an example of a system that includes an apparatus 10, according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may include an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a mid-haul interface, referred to as an F1 interface, and the DU(s) may have one or more radio unit (RU) connected with the DU(s) over a front-haul interface. The DU may be a logical node that includes a subset of the gNB functions, depending on the functional split option. It should be noted that one of ordinary skill in the art would understand that apparatus 10 may include components or features not shown in FIG. 5.

As illustrated in the example of FIG. 5, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in FIG. 5, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to providing assistance information from a user equipment to a capacity cell, for example in a wake-up request signal while the capacity cell is in dormant state.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be include any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of global system for mobile communications (GSM), narrow band Internet of Things (NB-IoT), LTE, 5G, WLAN, Bluetooth (BT), Bluetooth Low Energy (BT-LE), near-field communication (NFC), radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be or may be a part of a network element or RAN node, such as a base station, access point, Node B, eNB, gNB, TRP, HAPS, IAB node, relay node, WLAN access point, satellite, or the like. In one example embodiment, apparatus 10 may be a gNB or other radio node, or may be a CU and/or DU of a gNB. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in FIGs. 3 and 4, or any other method described herein. In some embodiments, as discussed herein, apparatus 10 may be configured to perform a procedure relating to providing providing assistance information from a user equipment to a capacity cell, for example in a wake-up request signal while the capacity cell is in dormant state, for example.

FIG. 5 further illustrates an example of an apparatus 20, according to an embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in FIG. 5.

As illustrated in the example of FIG. 5, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 5, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can include any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDM symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, FIGs. 3 and 4, or any other method described herein. For example, in an embodiment, apparatus 20 may be controlled to perform a process relating to providing providing assistance information from a user equipment to a capacity cell, for example in a wake-up request signal while the capacity cell is in dormant state, as described in detail elsewhere herein.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of any of the operations discussed herein.

In view of the foregoing, certain example embodiments provide several technological improvements, enhancements, and/or advantages over existing technological processes and constitute an improvement at least to the technological field of wireless network control and/or management. Certain embodiments have various benefits and/or advantages. For example, certain embodiments may leverage UE assistance to optimize capacity cell activation. The cell activation procedure may be adjusted to the UEs' needs. Moreover, certain embodiments may improve capacity cells' energy saving potential, particularly when they are in ES mode. The SSB/SIB transmission may be provided only upon UE need. Additionally, certain embodiments may reduce packet latency. The UE can experience better radio conditions/resource availability when deciding to wake up a capacity cell, and at the same time, may optimize the packet latency by minimizing the procedures needed before actual UL data transmission to the capacity cell.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium. The term "non-transitory" as used herein, is a limitation of the medium itself (i.e. tangible, not a signal) as opposed to a limitation on data storage persistency (e.g. RAM vs. ROM).

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to example embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

### PARTIAL GLOSSARY:

- BS: Base station
- DRB: Data Radio Bearer)
- gNB: Next generation NB
- LCG: logical channel group
- LCH: logical channel
- OFDM: Orthogonal Frequency Division Multiplexing
- PCI: Physical Cell ID
- PRACH: Physical RACH Random Access Channel
- QoS: Quality of Service
- RA: Random Access
- RACH: Random Access Channel
- RAN: Radio Access Network
- RRC: Radio Resource Control protocol
- RSRP: Reference signal Receive Power
- SI: System Information
- SIB: System Information Block
- SS: synchronization signal
- SSB: synchronization signal block
- TX: Transceiver
- RX: Receiver
- UE: User Equipment
- WUR: Wake-up receiver
- WUS: Wake-up signal

## Claims

1. An apparatus comprising means for:
sending, to a network element, a message comprising assistance information associated with system information stored at the apparatus; and
receiving a response to the message from the network element.

2. The apparatus of claim 1, wherein the message comprises a wake-up signal.

3. The apparatus of claim 1 or claim 2, wherein the network element comprises a dormant network element.

4. The apparatus of any of claims 1 to 3, wherein the assistance information is signaled explicitly or implicitly.

5. The apparatus of any of claims 1 to 4, wherein the means are further configured to perform:
storing a latest received system information related to the network element and at least one of the following: a version identifier or an acquisition time corresponding to the latest received system information, wherein the assistance information is indicative of the stored latest received system information.

6. The apparatus of any of claims 1 to 5, wherein the means are further configured to perform:
receiving a wake-up signal configuration from a network, wherein the sending the message to the network element is performed based on the received wake-up signal configuration.

7. The apparatus of claim 6, wherein the wake-up signal configuration is indicative of what information to provide as at least part of the assistance information.

8. The apparatus of claim 7, wherein the wake-up signal configuration is further indicative of how the information is to be conveyed.

9. The apparatus of any of claims 1 to 8, wherein the response comprises at least one of the following: at least one reference signal or system information based on the message.

10. The apparatus of claim 9, wherein the at least one reference signal comprises at least one of the following: a tracking reference signal, channel state information reference signal, or a synchronization signal block.

11. The apparatus of claim 9 or 10, wherein the system information comprises system information block one.

12. The apparatus of any of claims 1 to 11, wherein the assistance information is provided to the network element to be used at the network element, or wherein the assistance information is provided to the network element to be used at a neighbor network element of the network element.

13. The apparatus of any of claims 1 to 12, wherein the response comprises an acknowledgment without updated information of system information block one based on a validity verification indicating that the stored system information is still valid.

14. The apparatus of any of claims 1 to 13, wherein the response comprises an acknowledgement that a wake-up request associated with the wake-up signal is received.

15. An apparatus comprising means for:
receiving, from a user equipment while the apparatus is dormant, a message comprising assistance information associated with system information stored at the user equipment; and
sending a response to the message to the user equipment.
